# EUROPEAN PATENT SPECIFICATION

(11) **EP 3 427 444 B1**
(45) Date of publication and mention of the grant of the patent: **06.11.2019**
(21) Application number: 17708742.6
(22) Date of filing: 02.03.2017
(51) Int. Cl.: H04L 12/28, H04L 12/24

(54) **A HOUSEHOLD APPLIANCE**
HAUSHALTSGERÄT
APPAREIL ÉLECTROMÉNAGER

(30) Priority: 08.03.2016 TR 201603006
(43) Date of publication of application: 16.01.2019
(73) Proprietor: Arçelik Anonim Sirketi, 34445 Istanbul (TR)
(72) Inventor: BERBEROGLU, Ridvan, 34950 Istanbul (TR); CETINKAYA, Ebru, 34950 Istanbul (TR)
(86) International application number: PCT/EP2017/054882
(87) International publication number: WO 2017/153238

(56) References cited:
- EP-A1- 2 611 079
- WO-A1-2011/064694
- CN-A- 104 363 213
- US-A1- 2008 143 489
- US-A1- 2014 156 081
- US-B2- 8 554 516

## Description

The present invention is related to a household appliance that can connect to a wireless local area network (WLAN).

Today, there is a wireless local area network in almost every home. The wireless local area networks created by means of modems enable electrical devices, especially smartphones and computers, to connect to the Internet. Moreover, household appliances are known that can connect to the wireless local area network inside the house by means of a card disposed on them. Thus, the household appliances can be controlled by the user by means of the electronic devices such as smartphones, tablets, etc. that are suitable for installing applications. Moreover, each household appliance connects to the local area network and communicate with the other devices on the local area network. Thus, by means of the network cards, the household appliances can recognize and send commands to each other. The household appliances can communicate with each other using certain protocols. The household appliances need to use the same protocol so as to communicate with each other. However, since household appliances produced by different producers do not have a common protocol, the said appliances cannot communicate with each other. In the state of the art, protocols that enable household appliances of different brands to communicate with each other are also developed. However, customizing the network cards to the products is problematic. Producing a customized network card for each product is inefficient and inconvenient in terms of inventory management, cost and labor.

In the state of the art United States of America Patent Application No. US2014156081 discloses a home appliance that can communicate with an outside home appliance and an online system including the same. In another state of the art document, Chinese Patent Application No. CN104363213 discloses a register and login control method for a network household appliance. A further state of the art document is the European Patent Application No. EP2611079 and it discloses a network system of home appliances. In another example of state of the art the International Patent Application No. WO2011064694 discloses a wireless network system with addrerss conflict resolving function. United States of America Patent Application No. US2008143489 discloses a coupling device for connecting two networks. In the state of the art United States of America Patent Application No. US8554516, a household appliance having an electronic card which can be updated by the technical service personnel is disclosed.

The aim of the present invention is the realization of a household appliance wherein network cards providing connection to the wireless local area network and thus communication with each other are standardized.

The household appliance realized in order to attain the aim of the present invention, explicated in the first claim and the respective claims thereof, comprises a network card that provides the connection to the wireless home network and a control card that provides serial communication with the network card. On the network card, a memory unit is provided, that contains the ID information enabling the household appliance to be identified, the protocols providing the communication and configuration data consisting of software modules that can be run on the household appliance.

The household appliance of the present invention comprises the network card without the memory unit thereof not installed during the production process and the control card including the appliance ID information. The memory unit is installed by the user or under the supervision of the user in accordance with the ID information obtained from the control card. In addition to the memory unit, the network card contains all the information necessary for performing its function. Thus, a standardized network card is disposed in each household appliance.

In an embodiment of the present invention, the household appliance comprises the control card having ID information, communication protocols and software modules. The software modules on the control card can be modified by the user or under the supervision of the user.

In an embodiment of the present invention, the memory unit corresponding to the ID information received from the control card is transmitted to the network card by the server. The server and the household appliance communicate via the Internet.

In an embodiment of the present invention, the memory unit can be downloaded by means of the mobile device using the application and installed on the network card. The ID information is received from the control card and transmitted to the mobile device.

In an embodiment of the present invention, the ID information is determined according to a code provided in the control card.

In an embodiment of the present invention, the network card verifies the memory unit via the control card. The network card and the control card are in continuous communication through serial communication (UART).

In an embodiment of the present invention, the network card checks the memory unit and the control card and if verified saves the information in the permanent memory. Thus, the memory unit is complete and ready to be used.

In an embodiment of the present invention, the memory unit having the configuration data can be modified and updated by the user after being installed on the network card.

In an embodiment of the present invention, the household appliance can be a cooling device, a cooking device, a washer or a dryer.

The household appliance realized in order to attain the aim of the present invention is illustrated in the attached figures, where:

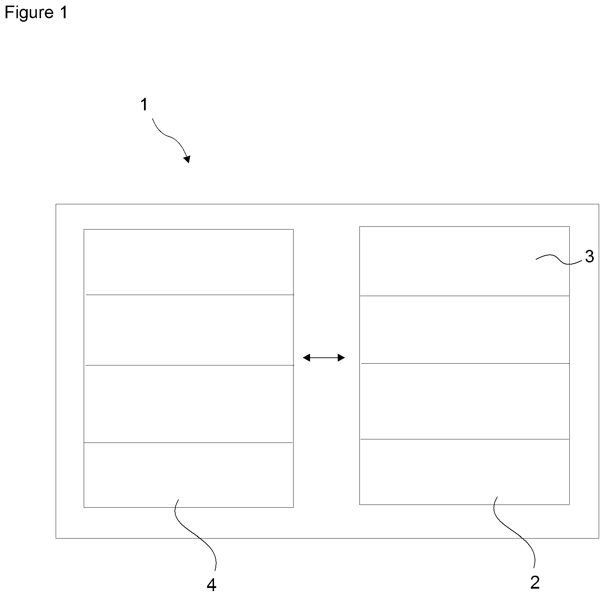

Figure 1 - is the schematic view of the household appliance, the control card and the network card.

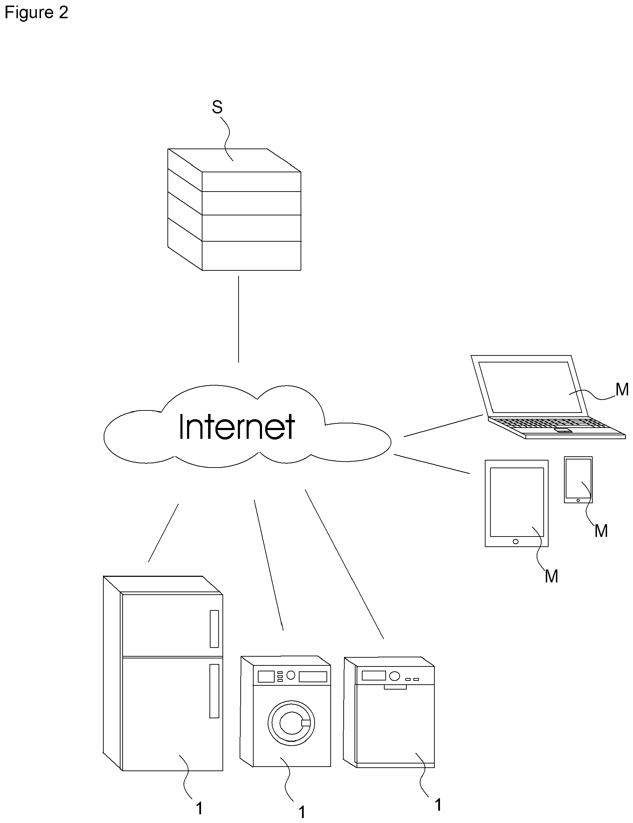

Figure 2 - is the schematic view of the household appliance, the server and the mobile device.

The elements illustrated in the figures are numbered as follows:
1. Household appliance
2. Network card
3. Memory unit
4. Control card

The household appliance (1) comprises a network card (2) providing the connection to a wireless local area network (WLAN), a memory unit (3) that is disposed on the network card (2) and that contains ID information, protocols and configuration data comprising software modules, and a control card (4) that provides the serial communication with the network card (2). While the control card (4) controls the operational algorithms of the household appliance (1), the network card (2) enables the household appliance (1) to connect to the Internet and provides smart device features. By connecting to the local area network, the household appliances (1) can access the Internet and communicate with each other. The control card (4) and the network card (2) are in continuous communication by means of serial cable communication (UART).

The household appliance (1) of the present invention comprises the network card (2), the memory unit (3) of which is installed afterwards by the user or under the supervision of the user according to the information received from the control card (4). The memory unit (3) that is disposed on the network card (2) and that contains the configuration data providing the identification of the ID of the household appliance (1) can be installed by the user. Thus, since the network card (2) disposed on the household appliance (1) does not contain any ID information, the same network card (2) can be installed on the household appliance regardless of the model and the brand thereof. By installing the memory unit (3) afterwards, the network cards (2) are customized according to the type and the model of the household appliance (1).

In an embodiment of the present invention, the control card (4) contains ID information, protocols and software modules and the software modules can be modified by the user or under the supervision of the user. The software modules on the control card (4), containing the operational algorithms of the household appliance (1) can be modified. Thus, the user can download the desired software via the Internet and install the same on the household appliance (1) or delete unnecessary software from the control card (4).

In an embodiment of the present invention, the household appliance (1) comprises the network card (2) whereto the memory unit (3) having the configuration data corresponding to the ID information received from the control card (4) by means of a server (S) that can connect to the wireless local area network via the Internet is delivered. The ID information of the household appliance (1) is defined on the control card (4). The memory unit (3) corresponding to the ID information transferred to the server (S) via the Internet is determined. The memory unit (3) is transferred to the network card (2) by the server (S).

In an embodiment of the present invention, the household appliance (1) comprises the network card (2) whereto the memory unit (3) having the configuration data corresponding to the ID information received from the control card (4) over the application by means of a mobile device (M) that connects to the wireless local area network via the Internet and controls software functions is delivered. The ID information on the control card (4) is transferred to the mobile device (M) via the Internet. By means of the application installed on the mobile device (M), the configuration data corresponding to the ID information is determined and transferred to the household appliance (1) via the Internet.

In an embodiment of the present invention, the control card (4) contains ID information defined by a code. The code may be a numerical code or a code in another form such as QR codes. A code that corresponds to each household appliance (1) and its model, determining the features of the household appliance (1) is stored on the control card (4) by the producer.

In an embodiment of the present invention, the household appliance (1) comprises the network card (2) that verifies the memory unit (3) having the configuration data via the control card (4) by means of serial communication. The network card (2) comprising the memory unit (3) verifies the memory unit (3) according to the ID information by communicating with the control card (4).

In an embodiment of the present invention, the network card (2) saves the memory unit (3) in the permanent memory after the verification thereof. When the memory unit (3) does not match with the ID information received from the control card (4), the memory unit (3) is rejected and the process is repeated.

In an embodiment of the present invention, the household appliance (1) comprises the network card (2) that can be modified by the user and under the supervision of the user after the installation of the memory unit (3). When necessary the user can modify the memory unit (3) over the Internet and delete unused software from the network card (2) or install different software.

The household appliance (1) can be a cooling device, a cooking device, a washer or a dryer.

By means of the household appliance (1) of the present invention, the network cards (2) are standardized. The network cards (2) that cannot be customized according to the type of the household appliance (1) during the production process are customized before use by installing the memory unit (3) that contains the configuration data. The software on the network card (2) and the control card (4) can be modified or updated afterwards. Thus, a standardized basic network card (2) that does not contain ID information can be produced for all household appliances (1). Inventory and labor costs are decreased and the user is enabled to install the software as per his/her preference.

## Claims

1. A household appliance (1) **comprising** a network card (2) providing a connection to a wireless local area network WLAN, and a memory unit (3) that is disposed on the network card (2) and that contains ID information, protocols and configuration data comprising software modules, **characterized by** further comprising a control card (4) that provides serial communication with the network card (2); wherein the memory unit (3) of the network card (2) is installed by the user or under the supervision of the user according to the information received from the control card (4).

2. A household appliance (1) as in Claim 1, **characterized by** the control card (4) that contains ID information, protocols and software modules, wherein the software modules can be modified by the user or under the supervision of the user.

3. A household appliance (1) as in Claim 1 or Claim 2, wherein the information received from the control card (4) includes ID information delivered by means of a server (S) that can connect to the wireless local area network via the Internet.

4. A household appliance (1) as in any of the above claims, wherein the memory unit (3) is arranged to have the configuration data corresponding to the ID information received from the control card (4) over the application by means of a mobile device (M) arranged to connect to the wireless local area network via the Internet and to deliver control software functions.

5. A household appliance (1) as in any of the above claims, **characterized by** ID information defined by a code on the control card (4).

6. A household appliance (1) as in any of the above claims, **characterized by** the network card (2) being arranged to verify the memory unit (3) via the control card (4) by means of serial communication.

7. A household appliance (1) as in any of the above claims, **characterized by** the network card (2) being arranged to store the memory unit (3) in the permanent memory upon the verification thereof.

8. A household appliance (1) as in any of the above claims, **characterized by** the network card (2) that can be modified by the user or under the supervision of the user after the installation of the memory unit (3).

9. A household appliance (1) as in any one of the above claims, which is a cooling device.

10. A household appliance (1) as in any one of the claims 1 to 8, which is a cooking device.

11. A household appliance (1) as in any one of the claims 1 to 8, which is a washer.

12. A household appliance (1) as in any one of the claims 1 to 8, which is a dryer.

## Patentansprüche

1. Ein Haushaltsgerät (1) umfasst eine Netzwerkkarte (2), die eine Verbindung zu einem drahtlosen und lokalen Netzwerk WLAN herstellen kann und eine Speichereinheit (3), die auf der Netzwerkkarte (2) angeordnet ist und ID-Informationen, Protokolle und Konfigurationsdaten aus Softwaremodulen enthält, **gekennzeichnet ist es** darüber hinaus durch eine Steuerkarte (4), die eine serielle Kommunikation mit der Netzwerkkarte (2) bereitstellt, wobei die Speichereinheit (3) der Netzwerkkarte (2) vom Benutzer oder unter der Aufsicht des Benutzers gemäß den von der Steuerkarte (4) empfangenen Informationen installiert wird.

2. Ein Haushaltsgerät (1) wie in Anspruch 1 aufgeführt, ist **dadurch gekennzeichnet, dass** die Steuerkarte (4) die ID-Informationen, Protokolle und Softwaremodule enthält, wobei die Softwaremodule durch den Benutzer oder unter Aufsicht des Benutzers modifiziert werden können.

3. Ein Haushaltsgerät (1) wie in Anspruch 1 oder 2 aufgeführt, wobei die von der Steuerkarte (4) empfangenen Informationen ID-Informationen enthalten, die von einem Server (S) geliefert werden und über das Internet eine Verbindung mit dem drahtlosen lokalen Netzwerk herstellen kann.

4. Ein Haushaltsgerät (1) wie in einem der vorherigen Ansprüchen aufgeführt, wobei die Speichereinheit (3) so eingerichtet ist, dass die Konfigurationsdaten entsprechend der ID-Information, die von der Steuerkarte (4) über die Anwendung empfangen wurde, mittels eines mobilen Geräts (M) bereitstellt, das eingerichtet ist, um eine Verbindung mit dem drahtlosen lokalen Netzwerk über das herzustellen Internet und Steuerungssoftware Funktionen zu liefern.

5. Ein Haushaltsgerät (1) wie in einem der vorherigen Ansprüchen aufgeführt, **ist dadurch gekennzeichnet, dass** die ID-Informationen durch einen Code auf der Steuerkarte (4) definiert sind.

6. Ein Haushaltsgerät (1) wie in einem der vorherigen Ansprüchen aufgeführt, **ist dadurch gekennzeichnet, dass** die Netzwerkkarte (2) eingerichtet ist und dass die Speichereinheit (3) über die Steuerkarte (4) anhand serieller Kommunikation verifiziert wird.

7. Ein Haushaltsgerät (1) wie in einem der vorherigen Ansprüchen aufgeführt, **ist dadurch gekennzeichnet, dass** die Netzwerkkarte (2) angeordnet ist, um die Speichereinheit (3) nach deren Überprüfung in dem permanenten Speicher zu speichern.

8. Ein Haushaltsgerät (1) wie in einem der vorherigen Ansprüchen aufgeführt, **ist dadurch gekennzeichnet, dass** die Netzwerkkarte (2) durch den Benutzer oder unter der Aufsicht des Benutzers nach der Installation der Speichereinheit (3) geändert werden kann.

9. Ein Haushaltsgerät (1) wie in einem der vorherigen Ansprüchen aufgeführt, ist ein Kältegerät.

10. Ein Haushaltsgerät (1), wie in den Ansprüchen 1 bis 8 aufgeführt, ist ein Kochgerät.

11. Ein Haushaltsgerät (1), wie in den Ansprüchen 1 bis 8 aufgeführt, ist eine Waschmaschine.

12. Ein Haushaltsgerät (1), wie in den Ansprüchen 1 bis 8 aufgeführt, ist eine Wäschetrockner.

## Revendications

1. Un appareil électroménager (1) **comprenant** une carte réseau (2) fournissant une connexion à un réseau local sans fil WLAN, et une unité de mémoire (3) qui est disposée sur la carte réseau :(2) et qui contient des informations ID, des protocoles et des données de configuration comprenant des modules logiciels, **caractérisé en ce qu'il** comprend, en outre, une carte de contrôle (4) qui assure une communication série avec la carte réseau (2); dont l'unité de mémoire (3) de la carte réseau (2) est installée par l'utilisateur ou sous la surveillance de celui-ci selon les informations reçues de la carte de contrôle (4).

2. Un appareil électroménager (1) selon la Revendication 1, **caractérisé par** la carte de contrôle (4) qui contient des informations ID, des protocoles et des modules logiciels, dont les modules logiciels peuvent être modifiés par l'utilisateur ou sous la surveillance de l'utilisateur.

3. Un appareil électroménager (1) selon la Revendication 1 ou la Revendication 2, dont l'information reçue de la carte de contrôle (4) inclue des informations ID délivrées au moyen d'un serveur (S) qui peut se connecter au réseau local sans fil via internet.

4. Un appareil électroménager (1) selon l'une quelconque des revendications précédentes, dont l'unité de mémoire (3) est agencée pour avoir les données de configuration qui correspondent aux informations ID reçues de la carte de contrôle (4) sur l'application au moyen d'un dispositif mobile (M) convenu pour se connecter au réseau local sans fil via Internet et pour fournir les fonctions de logiciel de contrôle.

5. Un appareil électroménager (1) selon l'une quelconque des revendications précédentes, **caractérisé par** des informations ID définies par un code sur la carte de contrôle (4).

6. Un appareil électroménager (1) selon l'une quelconque des revendications précédentes, **caractérisé en ce que** la carte réseau (2) est agencée pour vérifier l'unité de mémoire (3) via la carte de contrôle (4) au moyen d'une communication en série.

7. Un appareil électroménager (1) selon l'une quelconque des revendications précédentes, **caractérisé en ce que** la carte réseau (2) est agencée pour conserver l'unité de mémoire (3) dans la mémoire permanente au moment de la vérification de celle-ci.

8. Un appareil électroménager (1) selon l'une quelconque des revendications précédentes, **caractérisé par** la carte réseau (2) qui peut être modifiée par l'utilisateur ou sous la surveillance de l'utilisateur après l'installation de l'unité de mémoire (3).

9. Un appareil électroménager (1) selon l'une quelconque des revendications précédentes est un appareil de refroidissement.

10. Un appareil électroménager (1) selon l'une quelconque des revendications 1 à 8 est un appareil de cuisson.

11. Un appareil électroménager (1) selon l'une quelconque des revendications 1 à 8 est une machine à laver.

12. Un appareil électroménager (1) selon l'une quelconque des revendications 1 à 8 est un séchoir.
